# EUROPEAN PATENT APPLICATION

(11) **EP 1 542 411 A2**
(43) Date of publication of application: **15.06.2005**
(21) Application number: 04300867.1
(22) Date of filing: 09.12.2004
(51) Int. Cl.: H04L 12/56

(54) **Method and apparatus for providing combined processing of packet and cell data**

(30) Priority: 10.12.2003 US 732575
(71) Applicant: ALCATEL, 75008 Paris (FR)
(72) Inventor: Robotham, Robert Elliott, Ottawa, Ontario K1H 5L8 (CA); Davis, Tom Edward, Ottawa, Ontario K1Y 1Y8 (CA)
(74) Representative: Feray, Valérie

(57) **Abstract**

In accordance with one or more embodiments of the present invention, a method and system for providing combined processing of cell traffic and packet traffic is described. For a communication device, the improved system provides a series of inputs on a single line card for processing both ATM traffic (e.g., native ATM or encapsulated packets) and packet traffic. The system receives the cell traffic and packet traffic, then converts them into a common form. The converted traffic traverses the fabric, then the system reconstitutes the converted traffic into its original form. The system provides output as ATM traffic or packet traffic, as originally received.

## Description

### BACKGROUND OF THE INVENTION

### (1) Field of the Invention

The invention relates generally to information networks and more particularly to a method and system for processing cell and packet traffic.

### (2) Description of the Related Art

Internet protocol (IP) routers exist which have cell-based switch fabrics and ATM interfaces and which provide ATM switching. Such a router is typically able to process both packet and cell traffic. However, existing routers typically do not process the cell traffic and packet traffic in a combined manner. The cell traffic and packet traffic are processed by the same system, but the different types of traffic must be processed through separate line cards.

Furthermore, existing systems typically do not provide simultaneous cell switching and packet support (e.g., native ATM connections and IP routing). In an existing system, packet traffic (packet-over-synchronous-optical-network (packet-over-SONET (POS)), ethernet and/or other packet traffic) is received first at a dedicated line card designed for processing packet traffic. The packet traffic is then processed through an IP processing module. Next, the IP traffic is sent through the switch fabric of the crossover and is received at another IP processing module. Finally, the packet traffic is sent out of the switch.

Meanwhile, cell traffic, such as asynchronous transfer mode (ATM) traffic or other cell traffic, is received by the system at a separate line card. There, cell traffic is received at a segmentation and reassembly (SAR) block, and is sent to a separate IP processor. Next, the converted cell traffic is sent through the same fabric as packet traffic. Next, the converted cell traffic (i.e., IP traffic) is received at an egress IP processing module. The module forwards the converted cell traffic to a corresponding SAR block. The SAR block recreates the cell traffic, and then the cell traffic is sent out of the system.

Accordingly, for existing systems, a single line card typically does not process ATM traffic and IP packets simultaneously.

### BRIEF DESCRIPTION OF THE SEVERAL VIEWS OF THE DRAWINGS

The present invention may be better understood, and its features made apparent to those skilled in the art by referencing the accompanying drawings.

Figure 1 is a block diagram illustrating a system in accordance with at least one embodiment of the invention.

Figure 2 is a block diagram illustrating a packet processing and queuing block in accordance with at least one embodiment of the invention.

Figures 3A and 3B are a flow diagram illustrating a method for providing combined processing of cell traffic and packet traffic in accordance with at least one embodiment of the invention.

Figure 4 is a block diagram illustrating an ingress side of a system in accordance with at least one embodiment of the invention.

Figure 5 is a block diagram illustrating an egress side of a system in accordance with at least one embodiment of the invention.

The use of the same reference symbols in different drawings indicates similar or identical items.

### DETAILED DESCRIPTION OF THE INVENTION

In accordance with one or more embodiments of the present invention, a method and system for providing combined processing of cell traffic and packet traffic is described. For a communication device, the improved system provides a series of inputs on a single line card for processing both ATM traffic (e.g., native ATM or encapsulated packets) and packet traffic. The system receives the cell traffic and packet traffic, then converts them into a common form. The converted traffic traverses the fabric, then the system reconstitutes the converted traffic into its original form. The system provides output as ATM traffic or packet traffic, as originally received.

In at least one example of the improved system, cell or packet traffic is first received at a common input/output (I/O) module. The packet traffic may be, for example, 10-gigabit ethernet or packet over SONET (POS). The cell traffic may be ATM carried over SONET, for example OC3, OC12, OC24, OC48, OC192, etc. The improved system also handles channelized traffic, such as channelized traffic over a SONET link.

After being received by the I/O module, the cell traffic and packet traffic are examined to identify their type. If the traffic is cell traffic, then the cells are provided to an L2 block module which polices ATM traffic for rate adherence. If the traffic is packet traffic, the packets bypass the L2 block module and are processed by the L2/L3 classification and forwarding module, where the packets are policed to determine whether the subscribed rate was allowed. The module provides both L2 and L3 levels of policing.

The system includes a cell and packet processing and queuing block (P&Q block). Output from the L2 block and the L2/L3 classification and forwarding blocks are both provided to the P&Q block. In the P&Q block, packets and cells are converted into a common form. According to one example, the common form may be cells. According to such an example, cells received from the L2 block need not be modified, but packets are assembled into cells. According to another example, the common form may be different from either packets or cells. According to such an example, both packets and cells are converted into the common form. A queuing mechanism in the block handles both traffic streams converted into the common form and queues and prioritizes the traffic according to system requirements.

From the P&Q block, the cell traffic and converted packet traffic are sent through the switching fabric as common form traffic. Accordingly, in the case of packet traffic being converted to cell traffic, to the ATM switching fabric, all traffic appears to be cell traffic.

After exiting the switching fabric, the combined cell traffic is processed by an L2/L3 classification and forwarding unit. Next, a cell and packet processing and queuing module identifies the appropriate packet traffic from the cells and reconstitutes it as packet traffic. The module may also modify the cell traffic. The cell traffic and packet traffic are separated and provided individually to the I/O module of the system. The I/O module transmits the respective forms of traffic out of the system.

Accordingly, in at least one example of such a system, cell and packet traffic are received by a single line card, processed and converted as necessary, transmitted through the fabric in a common format, reconstituted as necessary, then sent out of the system. As such, the two traffic streams are stored simultaneously in a single line card. By obviating the need for separate line cards to handle different types of traffic streams, such an example of an improved system provides a capability for any service on any port through a single line card, which affords simplified selection of line cards when populating shelves. Accordingly, support for a mixed system is provided through a single solution. Additionally, no external segmentation and reassembly (SAR) block is required.

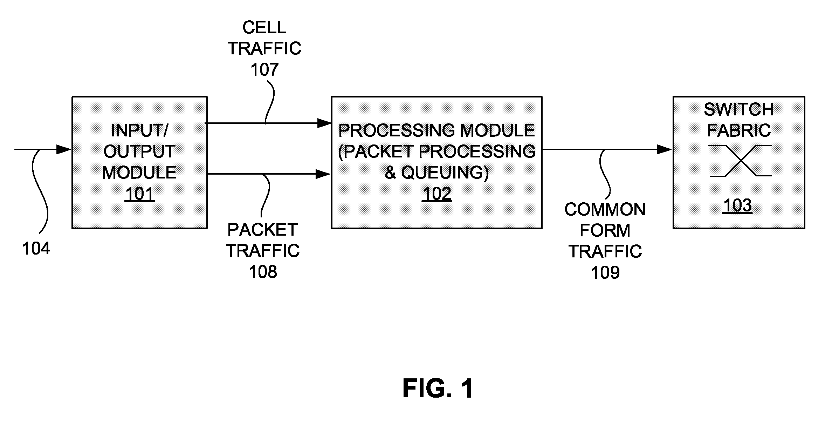

Figure 1 is a block diagram illustrating a system in accordance with at least one embodiment of the invention. The system comprises input/output module 101, processing module 102, and switch fabric 103. Data which may be in the form of cell data (i.e. cell traffic) and/or packet data (i.e., packet traffic) are received at data input 104 of input/output module 101. Input/output module 101 distinguishes the cell traffic from the packet traffic, provides the cell traffic to processing module 102 via cell traffic output 107, and provides the packet traffic to processing module 102 via packet traffic output 108. Processing module 102 performs processing, including packet processing, and queuing. Processing module 102 converts cell traffic from cell traffic output 107 and packet traffic from packet traffic output 108 to a common form. The common form allows data obtained from the cell traffic and packet traffic and expressed in the common form to be processed using the same elements within processing module 102. Processing module 102 also queues data in the common form so that it may be sent to switch fabric 103 via common form traffic output 109.

Processing module 102, by combining processing and queuing operations within the same device, can avoid bottlenecks that might occur if such operations were performed at different points along the path through which the traffic flows. For example, a packet processing portion of processing module 102 can identify a relationship between a packet of packet traffic 108 and cells within which such a packet may be communicated (e.g., using IP over ATM). As an example, the packet processing portion of processing module 102 may analyze a cell header of a cell to determine whether an end of a packet occurs within that cell. As a particular example, such analysis may be performed by checking a end-of-message indicator within the cell header. If the analysis of the cell header indicates that an end of a packet occurs within the cell, the packet processing portion of processing module 102 can interpret descriptive information within the cell concerning the packet. As a particular example, the packet processing portion of processing module 102 can interpret an ATM Adaptation Layer 5 (AAL5) trailer. An AAL5 trailer not only identifies the end of a packet, but also provides other information about the packet, such as error detection information. Such information may be used to determine that the information of a packet has been successfully received in the processing module 102, thereby allowing it to be properly forwarded to switch fabric 103.

Since information which is useful for queuing, such as the information concerning a packet that is obtained by the packet processing portion of processing module 102, is readily available to the queuing portion of processing module 102, data can pass smoothly and efficiently through processing module 102 without encountering unnecessary bottlenecks or other inefficiencies.

As cell traffic, such as ATM traffic, is typically communicated over a virtual connection defined between two points, an expectation exists that such a virtual connection will be terminated at the final point along the virtual connection. Accordingly, processing module 102 can serve to terminate virtual connections. Such termination of virtual connections can be useful in a variety of situations, for example, when processing data that is to be passed to different destinations, such as broadcast or multicast streams destined for multiple locations. When originating one or more destination virtual circuits, the system can contiguously transfer packet or cell traffic from one or more source virtual circuits. Alternatively, for cell traffic intended to terminate at a specific point beyond processing module 102, processing module 102 may pass such cell traffic without terminating its virtual connection. In the event that a virtual connection exists at data input 104 and it is desired that one or more corresponding virtual connections emanate from the opposite side of switch fabric 103, processing module 102 can terminate an incoming virtual connection, and a processing module coupled to the output of switch fabric 103 may originate the one or more virtual connections leading to other points in the network. Also, such a processing module on the outgoing side of switch fabric 103 may be used to convert common form traffic, such as that found along common form traffic input 109 to forms such as cell traffic or packet traffic compatible with network elements at the destinations of such traffic or along the way to such destinations.

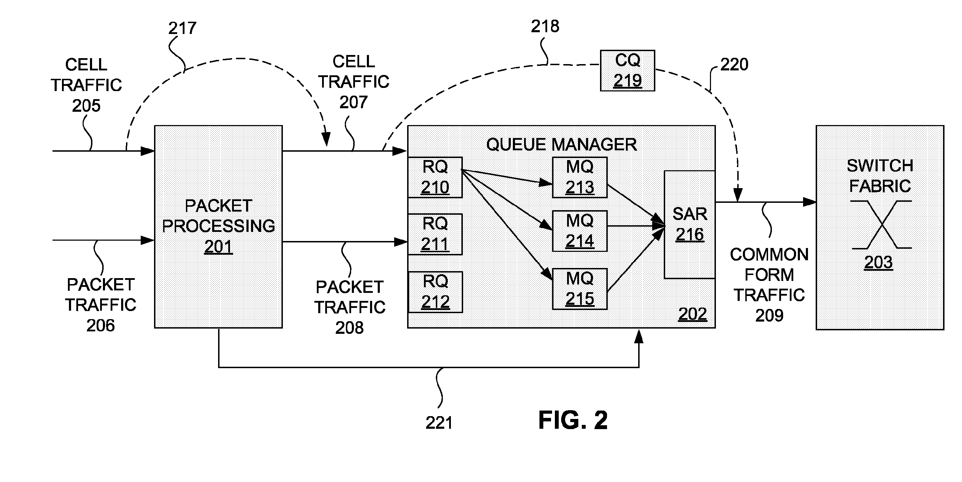

Figure 2 is a block diagram illustrating a packet processing and queuing block in accordance with at least one embodiment of the invention. The packet processing and queuing block comprises packet processing block 201 and queue manager 202. Cell traffic is received at packet processing block 201 via cell traffic input 205. Packet traffic is received at packet processing block 201 via packet traffic input 206. Cell traffic is sent to queue manager 202 from packet processing block 201 via cell traffic output 207. Packet traffic is sent to queue manager 202 from packet processing block 201 via packet traffic output 208. Non-terminating cell traffic may bypass packet processing block 201 via bypass path 217. Queue manager 202 receives input data such as data from cell traffic output 207 or packet traffic 208 at a plurality of reassembly queues, such as reassembly queues 210, 211, and 212. The reassembly queues perform processing of cell traffic 207 and packet traffic 208, as well as forwarding of data from the cell traffic 207 and packet traffic 208 to merge queues, such as merge queues 213, 214, and 215. By performing both such processing and forwarding within the same element, the reassembly queues avoid performance problems, such as bottlenecks.

The plurality of reassembly queues pass the traffic to a plurality of merge queues, such as merge queues 213, 214, and 215. The merge queues pass the traffic to segmentation and reassembly (SAR) block 216 of queue manager 202. Segmentation and reassembly block 216 outputs the traffic in a common form along common form traffic output 209 to switch fabric 203. Non-terminating cell traffic may bypass queue manager 202 from cell traffic output 207 to common form traffic output 209 via bypass path 218, cell queue 219, and bypass path 220.

Notably, packet processing block 201 passes information useful for queuing to queue manager 202 along output 221. By passing such information, which may include information as to the cells or common form data elements within which data from a packet are contained, decisions necessary for efficient queue management may be made in queue manager 202 even before all of the corresponding data have arrived at queue manager 202. Thus, even as packet processing occurs at packet processing block 201 for a particular packet, reassembly can occur for that same packet within queue manager 202. As reassembly is completed, packet analysis is, in many cases, also completed, allowing the data to be sent to an appropriate merge queue, such as merge queues 213, 214,or 215.

Packet processing block 201 can begin analyzing a packet header of a packet even before data corresponding to the body of that packet arrives at packet processing block 201. Thus, packet processing block 201 can be frame aware, recognizing attributes of a packet and communicating information concerning such attributes along output 221 to queue manager 202. As such information is communicated to queue manager 202, queue manager 202 is able to beneficially apply such information to the queuing of traffic, for example, allowing efficient reassembly of packets within the reassembly queues. Also, queue manager 202 can perform frame alteration on frames at the queuing point (e.g., at the reassembly queues and/or merge queues of queue manager 202). Any changes in bandwidth requirements arising from changes in the frame size due to frame alteration are accommodated by the queuing point. Such frame alteration may include an increase or decrease in the amount of data (e.g., there may be more or less data transmitted from the point of frame alteration as was received by the point of frame alteration). By performing frame alteration at the queuing point, packet processor 201 does not require its own queuing capability to handle changes in the frame size, as such changes do not occur until after the data has passed the packet processor 201 and arrived at queue manager 202. Queue manager 202 can accommodate any changes in the sizes of frames being forwarded to switching fabric 203 by changing the rate at which data is sent to switch fabric 203. Sufficient memory resources are provided within queue manager 202 to accommodate storage needs arising from any frame alteration or changes in the rate at which data may be sent to switch fabric 203.

Frame alteration can be performed by simply communicating an instruction, such as an instruction to encapsulate or decapsulate a quantity of data, to the system element performing the frame alteration. For example, an instruction or sequence of instructions can be communicated to queue manager 202. Queue manager 202 then performed the received instruction or instructions on specified data received by queue manager 202 so as to perform the frame alteration and produce the desired output data. The queue manager 202 is capable of responding to an indication received from packet processor 201 in combination with contextual information retained by queue manager 202. Such contextual information can be programmed by a switch control plane coupled to queue manager 202. Thus, instructions received by queue manager 202 from packet processor 201 can reference data and/or instructions stored by queue manager 202.

By performing conversion of cell traffic 207 and packet traffic 208 to a common form at the reassembly queues, such as reassembly queues 210, 211, and 212, the reassembly queues can process data from both cell traffic 207 and packet traffic 208 without introducing performance problems. The reassembly queues include logic to perform such conversion of cell traffic 207 and packet traffic 208 to a common form. Furthermore, the reassembly queues are provided with the ability to terminate incoming virtual circuits.

When the reassembly queues receive cell traffic 207, such as ATM traffic, a cell of such traffic typically includes a header and a payload. In the example of ATM, the payload is typically 48 bytes in length. The reassembly queues strip the headers from the cells and concatenate the payloads, which, in at least some cases, such as IP-over-ATM, yields a frame plus a descriptive information, such as an AAL5 trailer. An AAL5 trailer not only serves to delimit a frame, but also provides other functionality, such as error detection capability.

When the reassembly queues receive packet traffic 208, such packet traffic 208 may be multiplexed (in which case it may have a control channel) or non-multiplexed (e.g., a single stream of data). Queue manager 202 allocates memory for a reassembly queue to store a header plus payload carrying a portion of a packet. As additional portions of the packet are received, queue manager 202 allows the reassembly queue to add the additional portions to portion stored in memory until the entire packet is stored in memory.

Queue manager 202 then provides for the reassembly queue to locate and edit out any unnecessary descriptive information, such as an AAL5 trailer, from the stored data. For example, the stored data may be stored in blocks of memory locations, where the valid stored data may be located according to its starting and ending memory locations. The blocks of memory locations used for storing the stored data may be represented according to a linked list. Such a linked list may be used to retrieve an entire frame from memory and to remove any unnecessary descriptive information, such as an AAL5 trailer from the data.

Any desired frame alteration may be performed on such data, with changes made to the linked list accordingly to reflect the effects of the frame alteration. To transmit the data obtained from packet traffic 208 as common form traffic 209, queue manager 202 can add descriptive information, such as an AAL5 trailer, to the data. Queue manager 202 can then divide the data plus the descriptive information into increments of communicable size, such as, for example, 48-byte portions. Queue manager 202 can then insert such increments of data into a unit of communication according to the common form traffic 209, for example, ATM cells. Such a unit of communication can contain an indication in its header as to whether or not that unit contains the descriptive information, such as the AAL5 trailer. Thus, subsequent processing of such data can be performed efficiently by examining the headers of the units of communication transmitted as common form traffic 209 to check for the presence of descriptive information within a unit. If a unit containing descriptive information, such as an AAL5 trailer, is identified, that descriptive information can be retrieved and interpreted. By interpreting such descriptive information, the element processing such data can be made to be frame aware, being able to identify the end of the packet, as well as being able to obtain other descriptive information concerning the packet.

Inspection of header information may be performed by packet processor 201, allowing packet processor 201 to communicate to queue manager 202 information as to how queue manager 202 should process the data being received at queue manager 202. Thus, using information contained within data passing through packet processor 201, packet processor 201 and queue manager 202 can be made frame aware.

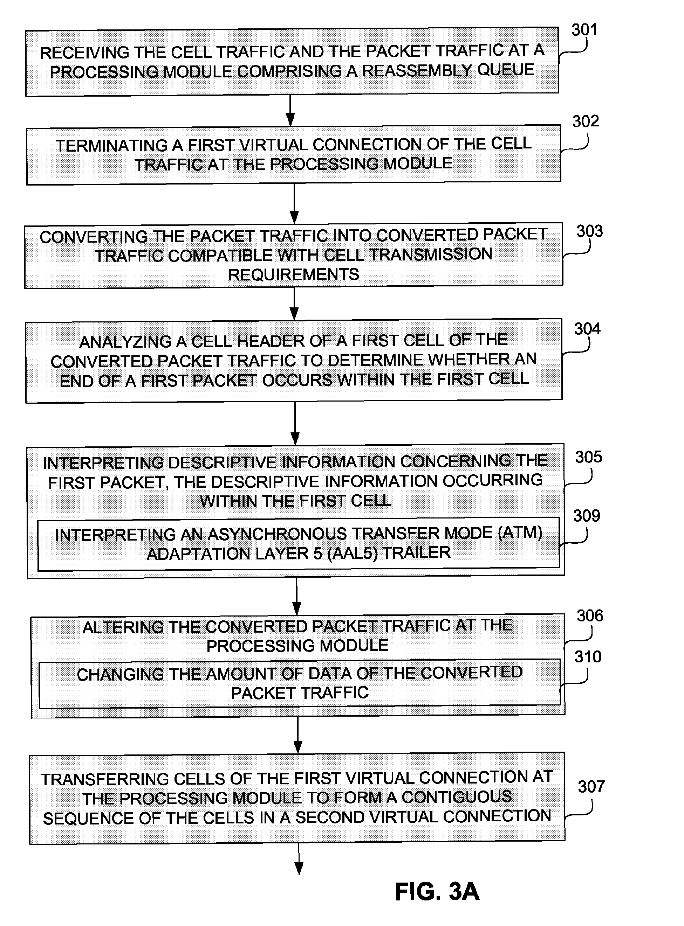

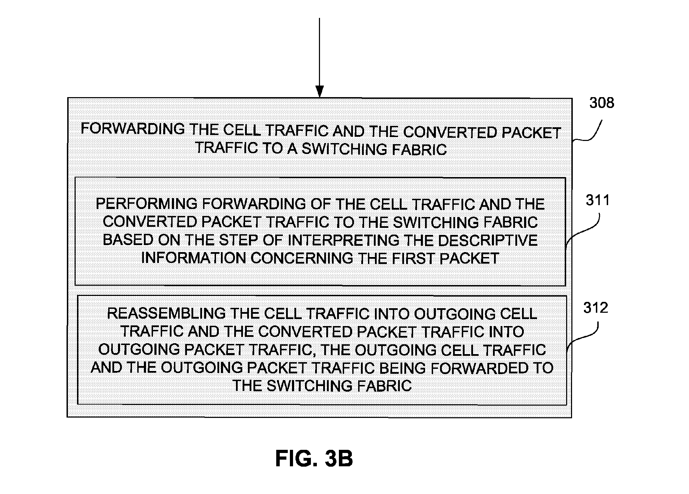

Figures 3A and 3B are a flow diagram illustrating a method for providing combined processing of cell traffic and packet traffic in accordance with at least one embodiment of the invention. In step 301, cell traffic and packet traffic are received at a processing module comprising a reassembly queue. In step 302, a first virtual connection of the cell traffic is terminated at the processing module. In step 303, the packet traffic is converted into converted packet traffic compatible with cell transmission requirements. In step 304, a cell header of a first cell of the converted packet traffic is analyzed to determine whether an end of a first packet occurs within the first cell. In step 305, descriptive information concerning the first packet and occurring within the first cell is interpreted. Step 305 may optionally comprise step 309, wherein an asynchronous transfer mode (ATM) Adaptation Layer 5 (AAL5) trailer is interpreted.

In step 306, the converted packet traffic is altered at the processing module. Step 306 may optionally comprise step 310, wherein the amount of data of the converted packet traffic is changed. In step 307, cells of the first virtual connection are transferred at the processing module to form a contiguous sequence of the cells in a second virtual connection. In step 308, the cell traffic and the converted packet traffic are forwarded to a switching fabric. Step 308 may optionally comprise step 311 and/or step 312. In step 311, the forwarding of the cell traffic and converted packet traffic to the switching fabric is performed based on the step 305 of interpreting the descriptive information concerning the first packet. In step 312, the cell traffic is reassembled into outgoing cell traffic and the converted packet traffic is reassembled into outgoing packet traffic, with the outgoing cell traffic and the outgoing packet traffic being forwarded to the switching fabric.

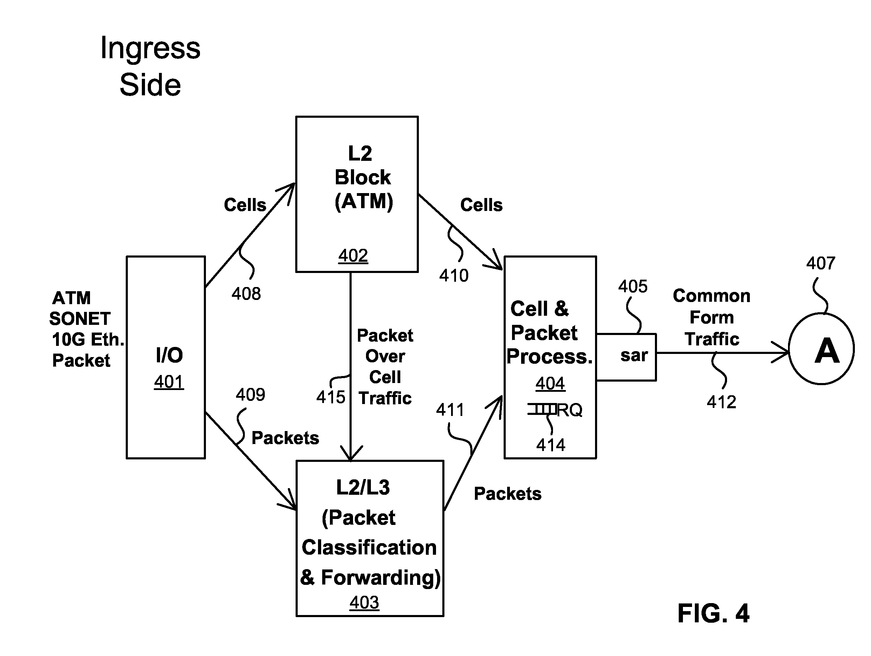

Figure 4 is a block diagram illustrating an ingress side of a system in accordance with at least one embodiment of the invention. The ingress side of the system is coupled to switch fabric 406 and comprises an input/output module 401, a layer 2 (L2) block 402, and a layer 2/layer 3 (L2/L3) block 403, a processing module 404, and a segmentation and reassembly (SAR) block 405. Incoming data are received at input/output module 401. Such data may be in a variety of forms according to a variety of protocols, such as asynchronous transfer mode (ATM), frame relay, ethernet (e.g., 10-gigabit ethernet), IP packet, etc. Input/output module 401 sends cell traffic, for example, ATM traffic, to L2 block 402 along cell traffic output 408 and sends packet traffic to L2/L3 block 403 along packet traffic output 409. L2 block 402 provides processing of the cell traffic at the data link layer (layer 2 of the International Standards Organization (ISO) Open Systems Interconnection (OSI) seven-layer model). L2 block 402 then sends the cell traffic along cell traffic output 410 to processing module 404.

For cell traffic that is determined to consist of packet traffic that is to be classified and forwarded at this system (e.g., packet over cell traffic, such as packet over ATM traffic), L2 block 402 sends the cell traffic to L2/L3 block 403 via packet over cell traffic output 415. In such a case, L2 block 402 performs cell processing and determines that certain cells of the cell traffic received over cell traffic output 408 are being used to communicate packet traffic, that the cell connections (e.g., virtual circuits) for such cells should be terminated, and that the packet traffic being communicated by the cells should be classified and routed. In such a case, L2 block 402 forwards such packet over cell traffic to L2/L3 block 403 for such packet classification and routing. It should be noted that not all cell connections carrying packets need to be terminated, in which case such packet over cell traffic may be passed without terminating the cell connections. It should further be noted that the actual traffic communicated over packet over cell traffic output 415 need not be communicated in the form of cell traffic, but may be communicated in the form of packet traffic. However, the expression packet over cell traffic is useful to distinguish the traffic along packet over cell traffic output 415 from the traffic along packet traffic output 409 so as to explain how each of those types of traffic is processed.

For packet traffic, including packet traffic received along either packet traffic output 409 or packet over cell traffic output 415, L2/L3 block 403 provides packet classification and forwarding at the network layer (layer 3 of the ISO OSI seven-layer model) and the data link layer (layer 2 of the ISO OSI seven-layer model) if appropriate. L2/L3 block 403 then sends the packet and packet over cell traffic along packet traffic output 411 to processing module 404.

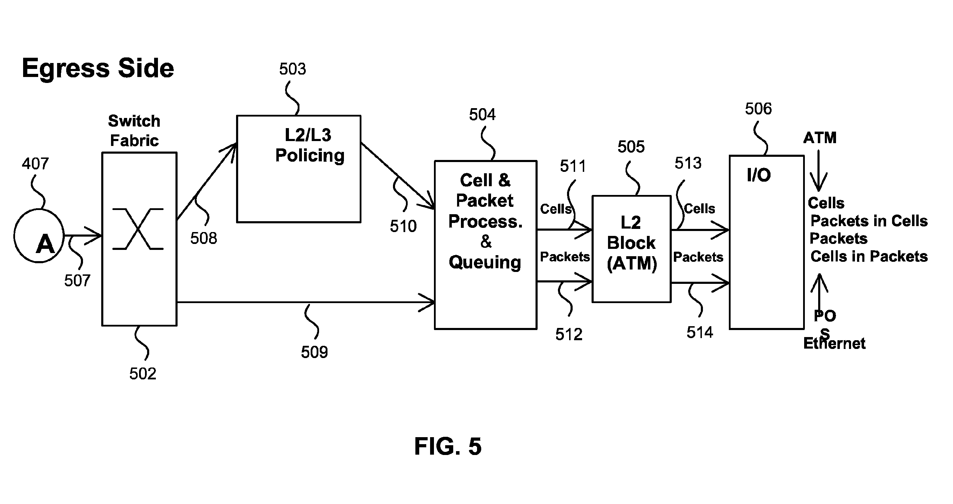

Processing module 404 receives both cell traffic and packet traffic and converts them to a common form for further processing. Processing module 404 includes a reassembly queue 414, which is an example of a number of reassembly queues that may be present in processing module 404. Reassembly queues such as reassembly queue 414 are used in the conversion of packet over cell traffic or of packet traffic that is otherwise segmented into a number of pieces, to a common form for further processing. Processing module 404 provides the common form traffic to segmentation and reassembly (SAR) block 405 and also provides to SAR block 405 information concerning the common form traffic that is useful for SAR block 405 to perform segmentation and reassembly of that common form traffic. SAR block 405 provides common form traffic in a format, for example fixed size cells, suitable for a subsequent switch fabric, such as switch fabric 502 of Figure 5, along common form traffic output 412, as indicated by reference A 407, which also appears in Figure 5.

Figure 5 is a block diagram illustrating an egress side of a system in accordance with at least one embodiment of the invention. The egress side of the system is coupled to switch fabric 502 and comprises layer 2/layer 3 (L2/L3) policing block 503, cell and packet processing and queuing block 504, L2 block 505, and input/output block 506. Data enters the egress side of the system at reference A 407, which also appears in Figure 4. Data proceeds to switch fabric 502 via input 507. Common form traffic is sent from switch fabric 502 via common form traffic output 508 to L2/L3 policing block 503, which implements traffic policing according to appropriate policies at the network layer (layer 3 of the ISO OSI seven-layer model) and the data link layer (layer 2 of the ISO OSI seven-layer model). L2/L3 policing block 503 sends common form traffic via common form traffic output 510 to processing module 504, which performs cell and packet processing and queuing. Other traffic, such as nonterminating cell traffic may be passed from switch fabric 502 to processing module 504 via cell traffic output 509, bypassing L2/L3 policing block 503.

Processing module 504 performs cell and packet processing and queuing, including producing cell traffic and packet traffic from the common form traffic it receives. By performing cell processing and queuing within a single element, processing module 504 avoids performance problems, such as bottlenecks. Processing module 504 sends cell traffic to layer 2 (L2) block 505 via cell traffic output 511 and packet traffic to layer 2 (L2) block 505 via packet traffic output 512. Layer 2 (L2) block 505 processes the traffic it receives at the data link layer (layer 2 of the ISO OSI seven-layer model). Layer 2 (L2) block 505 sends cell traffic to input/output module 506 via cell traffic output 513 and packet traffic to input/output module 506 via packet traffic output 514. Input/output module 506 sends cell traffic and packet traffic to other network devices.

Accordingly, a method and system for providing combined processing of cell traffic and packet traffic has been described. It should be understood that the implementation of other variations and modifications of the invention in its various aspects will be apparent to those of ordinary skill in the art, and that the invention is not limited by the specific embodiments described. It is therefore contemplated to cover by the present invention, any and all modifications, variations, or equivalents that fall within the spirit and scope of the basic underlying principles disclosed and claimed herein.

## Claims

1. A method for providing combined processing of cell traffic (107) and packet traffic (108) comprising:
receiving (301) the cell traffic and the packet traffic at a processing module comprising a reassembly queue;
converting (303) the packet traffic into converted packet traffic compatible with cell transmission requirements; and
forwarding (308) the cell traffic and the converted packet traffic to a switching fabric.

2. The method of claim 1 further comprising:
terminating (302) a first virtual connection of the cell traffic at the processing module.

3. The method of claim 2 further comprising:
transferring (307) cells of the first virtual connection at the processing module to form a contiguous sequence of the cells in a second virtual connection.

4. The method of anyone of the preceding claims further comprising:
analyzing (304) a cell header of a first cell of the converted packet traffic to determine whether an end of a first packet occurs within the first cell.

5. The method of claim 4 further comprising:
when the end of the first packet is determined to occur with the first cell, interpreting (305) descriptive information concerning the first packet, the descriptive information occurring within the first cell.

6. The method of claim 5 wherein the step of interpreting descriptive information further comprises:
interpreting (309) an asynchronous transfer mode (ATM) adaptation layer 5 (AAL5) trailer.

7. The method of claim 5 wherein the step of forwarding (308) the cell traffic and the converted packet traffic to the switching fabric is performed based on the step of interpreting (305) the descriptive information concerning the first packet.

8. The method of anyone of the preceding claims, wherein the step of forwarding (308) the cell traffic and the converted packet traffic to the switching fabric further comprises:
reassembling (312) the cell traffic into outgoing cell traffic and the converted packet traffic into outgoing converted packet traffic, the outgoing cell traffic and the outgoing converted packet traffic being forwarded to the switching fabric.

9. The method of anyone of the preceding claims, further comprising:
altering (306) the converted packet traffic at the processing module.

10. The method of claim 9 wherein the step of altering (306) the converted packet traffic at the processing module further comprises:
changing (310) the amount of data of the converted packet traffic.

11. A system for providing combined processing of cell traffic (107) and packet traffic (108) through a single interface, the system comprising:
an input/output module (101) for receiving the cell traffic and packet traffic (104) ;
a processing module (102) for converting the packet traffic into converted packet traffic compatible with cell transmission requirements; and
a switching fabric (103) for receiving the cell traffic and the converted packet traffic forwarded from the processing module.

12. The system of claim 11 wherein the processing module (102) terminates a first virtual connection of the cell traffic.

13. The system of claim 12 wherein the processing module (102) transfers cells of the first virtual connection to form a contiguous sequence of the cells in a second virtual connection.

14. The system of anyone of claims 11 to 13, wherein the processing module (102) analyzes a cell header of a first cell of the converted packet traffic to determine whether an end of a first packet occurs within the first cell.

15. The system of claim 14 wherein, when the end of the first packet is determined to occur with the first cell, the processing module (102) interprets descriptive information concerning the first packet, the descriptive information occurring within the first cell.

16. The system of claim 15 wherein the descriptive information comprises an asynchronous transfer mode (ATM) adaptation layer 5 (AAL5) trailer.

17. The system of claim 15 wherein the processing module forwards the cell traffic and the converted packet traffic to the switching fabric (103) based on the descriptive information concerning the first packet.

18. The system of anyone of claims 11 to 17 wherein the processing module reassembles the cell traffic into outgoing cell traffic and the converted packet traffic into outgoing converted packet traffic, the outgoing cell traffic and the outgoing converted packet traffic being forwarded to the switching fabric.

19. The system of claim 11 wherein the processing module alters the converted packet traffic.

20. The system of claim 19 wherein the processing module, by altering the converted packet traffic, changes the amount of data of the converted packet traffic.
